# EUROPEAN PATENT APPLICATION

(11) **EP 1 758 343 A2**
(43) Date of publication of application: **28.02.2007**
(21) Application number: 06014710.5
(22) Date of filing: 14.07.2006
(51) Int. Cl.: H04M 1/02

(54) **Hinge device for portable terminal and portable terminal having the same**

(30) Priority: 22.08.2005 KR 20050076859
(71) Applicant: Samsung Electronics Co., Ltd., Yeongtong-gu Suwon-si, Gyeonggi-do (KR)
(72) Inventor: Jung, Young-Jun, c/o Samsung Elec. Co., Ltd., Suwon-si, Gyeonggi-do (KR); Park, Sung-Sun, c/o Samsung Elec. Co., Ltd., Suwon-si, Gyeonggi-do (KR); Kwak, Ki-Hwan, c/o Samsung Elec. Co., Ltd., Suwon-si, Gyeonggi-do (KR); Kim, Hun-Sub, c/o Samsung Elec. Co., Ltd., Suwon-si, Gyeonggi-do (KR)
(74) Representative: Lang, Johannes

(57) **Abstract**

A hinge device for a portable terminal rotatably couples a first housing to a second housing of a portable terminal. The hinge device includes a first hinge cam fixed to one of the housings of the portable terminal and a second hinge cam fixed to the other one of the housings of the portable terminal. The first hinge came has a cam groove on a surface, and the second hinge cam is rotatably received in the cam groove to generate friction with an inner wall of the cam groove. The hinge device has a reduced length and can occupy a smaller area in the portable terminal. Further, the hinge device allows the separate housing to be installed to the portable terminal while maintaining the shape of the portable terminal so that the separate housing slidably moves, thereby allowing increased design flexibility for the portable terminal. Furthermore, since the hinge device requires a small space in the portable terminal, the design specifications of the portable terminal may be easily changed.

## Description

### BACKGROUND OF THE INVENTION

### Field of the Invention

The present invention relates to portable terminals, such as cellular phones, Personal Digital Assistants, hand held phones, game phones and camera phones. More particularly, the present invention relates to a hinge device for rotatably coupling a pair of housings of a portable terminal to each other.

### Description of the Related Art

Generally, a portable terminal is a device for providing a wireless communication function between users, or between a user and a service provider through a mobile communication base station. A user can receive and use through the portable terminal various kinds of services, such as a voice communication service, a short message sending service, a mobile banking service and a TV viewing service, and contents such as on-line games, video-on demand, and the like.

The portable terminals can be generally classified, based on their shapes, into bar type portable terminals, flip-type portable terminals, folding type portable terminals, and sliding type portable terminals. Bar type portable terminals have a communication circuit and an input/output device such as a transmitter and a receiver disposed in a housing, and a flip type portable terminal has a flip cover which is coupled to a bar type portable terminal. A folder type portable terminal has a pair of housings which are capable of rotating and opening and have an input/output device which is arranged on the housings. The sliding type portable terminal has been recently developed and increases the portability and convenience of a portable terminal. The sliding type and folder type portable terminals have been favored by individual users.

Early mobile communication services using the portable terminal were limited to voice communication services, short message sending services, and the like. Service has been expanded to include transmitting files such as game, music and moving picture files, on-line game services, and multimedia services.

The increased variety of content has spurred various changes in the function and design of portable terminals. For example, a portable terminal with a camera lens assembly not only takes pictures, but has also contributed to the commercialization of image communications.

Meanwhile, folder type portable terminals are representative of terminals which are commercially available in the marketplace. Conventional portable terminals have a structure with a pair of housings that are rotatably coupled to one another by a hinge device. U.S. Patent 6,292,980, issued on September 25, 2001, which is hereby incorporated by reference in its entirety, discloses a hinge device for a portable terminal. The disclosed hinge device converts elastic force into rotational force by using a pair of hinge cams.

However, elastic members and hinge cams are arranged along a hinge axis in the conventional hinge device, and the conventional hinge device has a length of at least 10 mm. Therefore, the conventional hinge device imposes limitations on the design and specification of the portable terminal. That is, although the portable terminal may have various widths from about 30 mm to above 50 mm, the portable terminal must have a pair of rotatable housings constructed by using the hinge device having a length larger than 10 mm. Therefore, it is difficult to change the design and the specification of the conventional portable terminal and to secure a space for mounting parts in the conventional portable terminal.

Accordingly, there is a need for an improved hinge device for a portable terminal which is smaller than conventional hinge devices.

### SUMMARY OF THE INVENTION

An aspect of the present invention is to address at least the above problems and/or disadvantages and to provide at least the advantages described below. Accordingly, an aspect of the present invention is to provide a hinge device for a portable terminal which has a reduced size, thereby decreasing the space required for mounting the hinge device in the portable terminal.

Another aspect of the present invention is to provide a hinge device for a portable terminal which can allow changes in the design and specification of the portable terminal and enable the portable terminal to provide a space in which parts are mounted.

In accordance with an exemplary embodiment of the present invention, a hinge device for a portable terminal having a first housing and a second housing rotatably coupled to the first housing rotatably couples the first housing to the second housing of the portable terminal. The hinge device comprises a first hinge cam fixed to one of the first and second housings of the portable terminal and having a cam groove on a surface of the first hinge cam, a second hinge cam fixed to the other of the first and second housings of the portable terminal and rotatably received in the cam groove, so as to make friction with an inner wall of the cam groove.

In accordance with another exemplary embodiment of the present invention, a portable terminal comprises a first and a second housing, a first hinge cam disposed on the first housing, the first hinge cam having a cam groove with an inner wall, and a second hinge cam disposed on the second housing. The second hinge cam comprises a pair of cam members, and at least one elastic member disposed between the pair of cam members, the elastic member biasing the cam members towards the inner wall of the cam groove.

### BRIEF DESCRIPTION OF THE DRAWINGS

The above and other objects, features, and advantages of certain embodiments of the present invention will be more apparent from the following description taken in conjunction with the accompanying drawings, in which:
FIG. 1 is an exploded perspective view of a hinge device for a portable terminal according to an exemplary embodiment of the present invention;
FIG. 2 is a perspective view showing a hinge cover of the hinge device for the portable terminal shown in FIG. 1;
FIG. 3 is a perspective view of the assembled hinge device for a portable terminal shown in FIG. 1;
FIG. 4 is a perspective view of the hinge device in FIG. 3, in which the hinge cover is removed from the hinge device;
FIG. 5 is a perspective view of a portable terminal having the hinge device in FIG. 1;
FIG. 6 is a perspective view of the portable terminal in FIG. 5, in which a second housing is open; and
FIG. 7 is a perspective view of the portable terminal in FIG. 5, in which a third housing slides along the second housing.

Throughout the drawings, the same reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

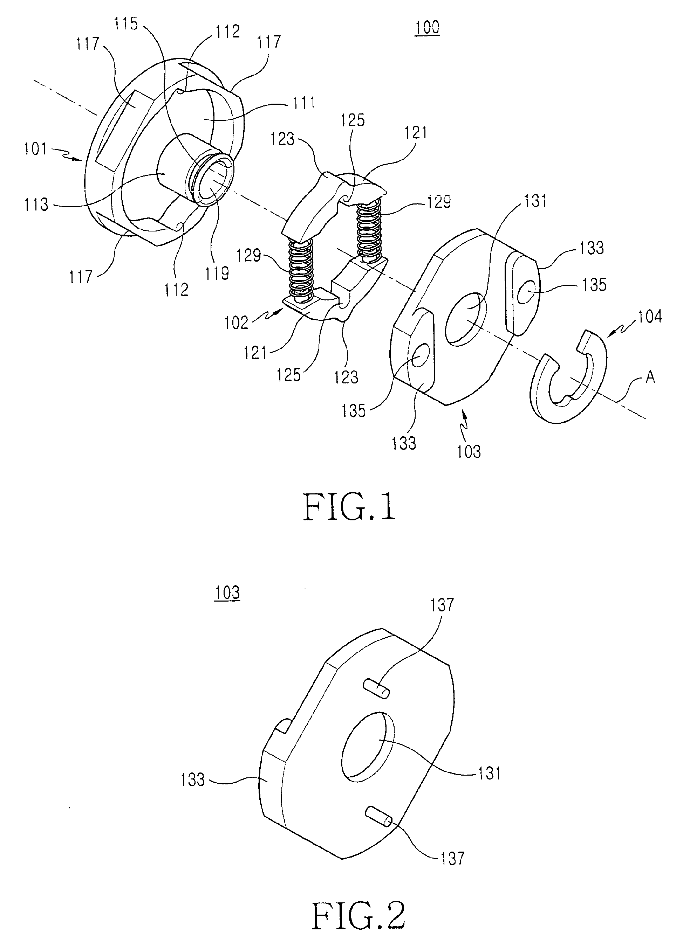

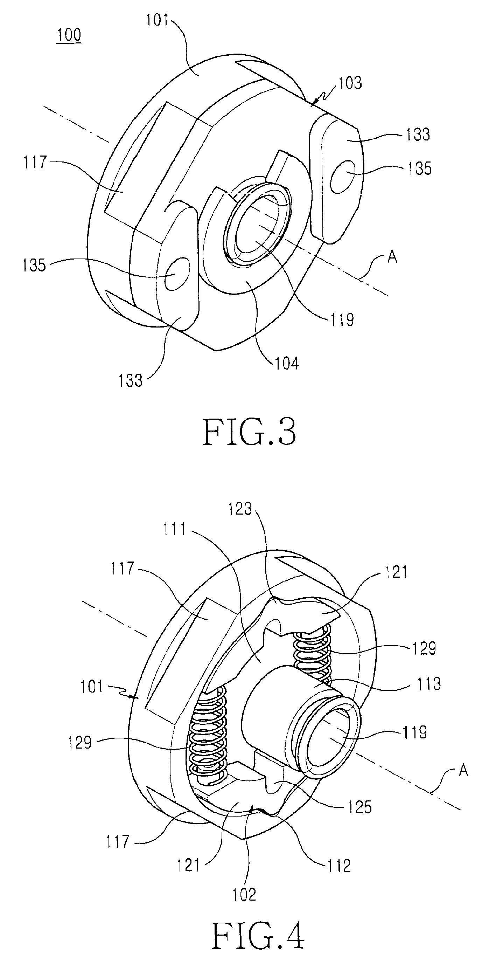

As shown in FIGS. 1 through 4, a hinge device 100 of a portable terminal according to an exemplary embodiment of the present invention is provided with a first hinge cam 101 and a second hinge cam 102 rotatably received in the first hinge cam 101, while making a pair of housings 201 and 202 of the portable terminal 200 to be rotatably coupled to each other.

The first hinge cam 101 has a cam groove 111 formed on a surface thereof, and a supporting shaft 113 extending along a hinge axis A from a bottom surface of the cam groove 111. The second hinge cam 102 is received in the cam groove 111 to enclose the supporting shaft 113. At least one stopper groove 112 is formed on an inner surface of the cam groove 111. In the exemplary embodiment of the present invention, a pair of stopper grooves 112 is formed with equal angles along a circumference of the cam groove 111. The first hinge cam 101 is fixed to one of the pair of housings 201 and 202 and has at least one cut-off portion 117 formed on an outer peripheral surface thereof so as to be substantially flat in order to fix the first hinge cam 101 to one of the housings 201 and 202. The substantially flat surface 117 formed on the outer peripheral surface of the hinge cam 101 helps the first hinge cam 101 to be rigidly fixed to the housing and is used to set an assembled position of the first hinge cam 101. That is, a groove matching the shape of the first hinge cam 101 may be formed in the housing of the portable terminal to which the first hinge cam 101 is fixed. It is possible to set the assembly position of the first hinge cam 101 by the flat surface 117.

The second hinge cam 102 is rotatably received in the cam groove 111 so as to generate friction with respect to the inner surface of the cam groove 111. The second hinge cam 102 includes a pair of cam members 121, and elastic members 129 extending between the cam members 121 to provide elastic force in a direction that the cam members 121 are spaced apart from each other. When the second hinge cam 102 is received in the cam groove 111, the elastic force of the elastic member acts so that the cam members 121 come into contact with the inner wall of the cam groove 111. The cam members 121 respectively have a stopper protuberance 123 formed on the outer peripheral surface thereof and a guide groove 125 formed on the inner peripheral surface thereof. As the second hinge cam 102 rotates in the cam groove 111, the stopper protuberances 123 generate friction on the inner surface of the cam groove 111 and are alternatively engaged with the stopper grooves 112. The stopper grooves 112 of the cam groove 111 are alternatively engaged with the stopper protuberances 123, so that the hinge device 100 can generate rotational force. That is, as the elastic force of the elastic members 129 acts such that the cam members 121 are spaced from each other, the cam members 121 move to a position that the cam members 121 are spaced farthest apart from each other. The position that the cam members 121 are spaced farthest apart from each other is a position that the stopper protuberances 123 are engaged with the stopper grooves 112, respectively. Therefore, the second hinge cam 102 generates rotational force in a direction that the stopper protuberances 123 are engaged with the stopper grooves 112.

The second hinge cam 102 is coupled to one housing of the pair of housings 201 and 202, while being rotatably received in the cam groove 111. The housings 201 and 202 are rotatably coupled to each other by means of the first and second hinge cams 101 and 102.

The hinge device 100 may have a hinge cover 103 to close the cam groove 111 in which the second hinge cam 102 is received. The hinge cover 103 has a pair of supporting protuberances 133 formed on a surface thereof, in which fastener, or screw, holes 135 are formed in the supporting protuberances 133, respectively. The supporting protuberances 133 and the fastener holes 135 are used for fixing the hinge cover 103 to the housing of the portable terminal 200 to which the second hinge cam 102 is coupled. That is, the hinge cover 103 is fixed by means of fasteners, such as screws, to one of the housings 201 and 202.

Guide protrusions 137 are formed on the other surface of the hinge cover 103 and correspond to the guide grooves 125 of the second hinge cam 102. As the guide protrusions 137 are engaged with the guide grooves 125, respectively, the second hinge cam 102 is restrained from rotating with respect to the hinge cover 103. Therefore, in an exemplary embodiment, the guide grooves 125 are deep enough to provide sufficient space for the cam members 121 to move straight towards each other or away from each other. That is, since the cam members 121 move towards each other or away from each other when the second hinge cam 102 rotates in the cam groove 111, the guide grooves 125 are deep enough to allow the cam members 121 to move straight.

As a result, the guide grooves 125 and the guide protuberances 137 are able to restrain the second hinge cam 102 from rotating with relation to the hinge cover 103, preferably with respect to the housing to which the second hinge cam is coupled, while having to maintain a condition under which the cam members 121 move straight.

On the one hand, the hinge device 100 constructed as described above can be made in a module such that the hinge cover 103 closes the cam groove 111 after the second hinge cam 102 is received in the cam groove 111. The supporting shaft 113 of the first hinge cam 101 sequentially extends through the second hinge cam 102 and the hinge cover 103 over one surface of the hinge cover 103. The hinge cover 103 has a thru-hole 131 formed therein through which the supporting shaft 113 extends. The supporting shaft 113 extending through the hinge cover 103 has a coupling groove 115 formed on an outer peripheral surface thereof. A restraining member 104, such as an E-ring, is coupled to the coupling groove 115, so as to form the hinge device 100 in a modular form.

On the other hand, the hinge device 100 may be arranged between and connected to the pair of housings 201 and 202. Therefore, the hinge device 100 has a guide hole 119 extending through the supporting shaft 113 for wires to pass through the guide hole 119 and electrically connect the pair of housings 201 and 202 to each other. The guide hole 119 extends along the hinge axis A and connects inner spaces of the housings 201 and 202 with each other, so that it is possible for the wires to electrically connect circuit devices to one another.

Conventional hinge devices generally have a length of at least 10 mm along their axis, while the hinge device as described above has a reduced length, such as a length of about 3 mm.

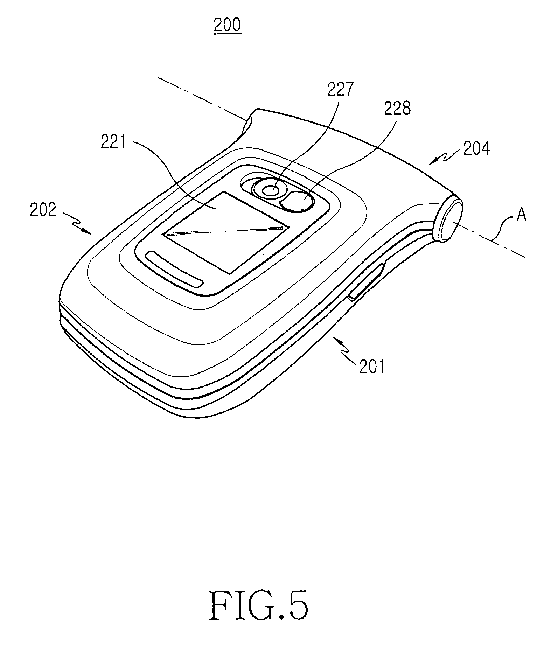

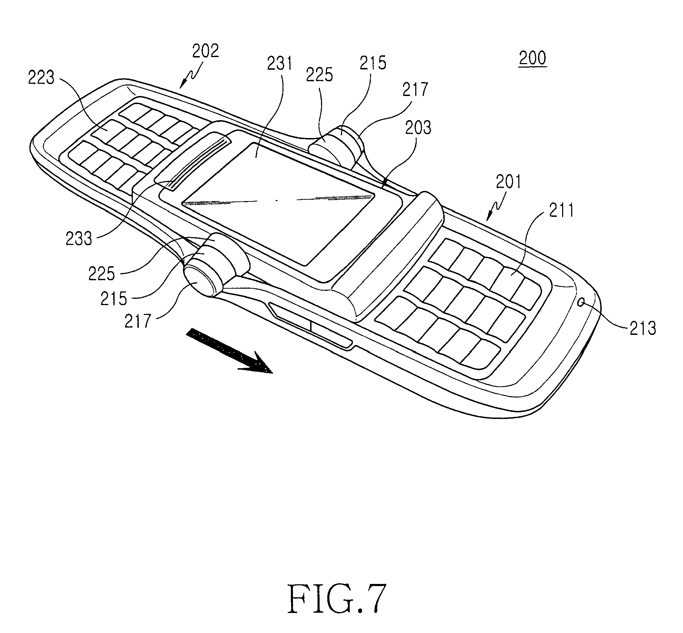

FIGS. 5 to 7 show a portable terminal 200 having the hinge device 100. The portable terminal 200 as shown in FIGS. 5 to 7 includes a first housing 201, a second housing 202 rotatably assembled with the first housing 202, and a third housing 203 slidably moving on the second housing 202. As shown in FIG. 7, when the second housing 202 is unfolded by an angle of about 180 degrees from the first housing 201, the third housing 203 slidably moves and opens a part of the second housing 202 while closing a part of the first housing 201.

The first housing 201 is provided with a keypad 211 and a receiver 213 which are installed on a surface of the first housing 201. Accordingly, as the second housing 202 rotates, the keypad 211 and the receiver 213 are opened and closed. The first housing 201 has first side hinge arms 215 formed at both sides of an upper end portion on a surface thereof. The first side hinge arms 215 have covers 217 attached to an outer surface of each first side hinge arm 215, respectively. The covers 217 are used for decoration in the portable terminal 200. Furthermore, the covers 217 may be replaced with speaker units.

The second housing 202 includes a sub-display unit 221, a camera lens 227, and a flash unit 228 which are installed on an exterior surface thereof, while having an auxiliary keypad 223 mounted on an interior surface thereof, and open and closed by means of the third housing 203. The second housing 202 has second side hinge arms 225 formed at both sides of one end thereof, so that the second side hinge arms 225 face the first side hinge arms 215.

The hinge device 100 is disposed between the inner surface of the first side hinge arm 215 and the outer surface of the second side hinge arm 225. At this time, the hinge device 100 is interposed between two pairs of first and second side hinge arms 225, or only between a pair of first and second hinge arms 225.

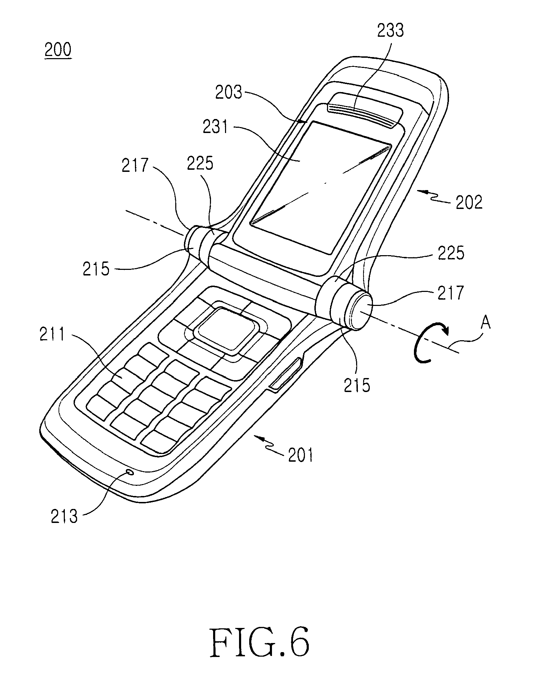

The third housing 203 is provided so as to slidably move on the second housing 202, as described above, on which a main display unit 231 and the receiver 233 are mounted. Referring to FIG. 6, when the second housing 202 is unfolded by about 150 degrees to 160 degrees with respective to the first housing 201, the portable terminal 200 is suitable for voice communication, like the general folder type portable terminal. However, in this state, the third housing 203 is restrained from slidably moving. That is, the third housing 203 may slidably move only when the second housing 202 is unfolded by an angle of about 180 degrees from the first housing 201.

As shown in FIG. 7, when the second housing 202 is unfolded by an angle of 180 degrees from the first housing 201 and the third housing 203 slidably moves, the auxiliary keypad 223 is open. When the auxiliary keypad 223 is open and a part of the keypad 221 of the first housing 201 is covered with the third housing 203, different keypads are arranged near both sides of the third housing 230. Thus, the user can simultaneously operate the keypad 211 of the first housing 201 and the auxiliary keypad 233 of the second housing 202 with both of his or her hands, while watching images displayed on the main display unit 231. That is, when the second housing 202 is opened to an angle of about 180 degrees and the third housing 203 slidably moves and opens the auxiliary keypad 223, the user can conveniently watch moving pictures and play games using the portable terminal.

The first hinge cam 101 of the hinge device 100 is coupled to one of the first and second housings 201 and 202, while the second hinge cam 102 is assembled with the other of the housings. When the first hinge cam 101 is coupled to the outer surface of the second side hinge arm 225 formed on the second housing 201, the hinge cover 103 is first fixed to the inner surface of the first side hinge arm 215, which in turn the second hinge cam 102 is assembled with the hinge cover 103 and received in the cam groove 111 of the first hinge cam 101. Thus, the first housing can be rotatably assembled with the second housing 202 by means of the hinge device 100.

Meanwhile, the main display unit occupies almost all of the second housing in the conventional folder type portable terminal. Further, it is impossible to assemble a separate housing having the display unit with the second housing so that the separate housing slidably moves on the second housing. This is because the conventional hinge device installed in the separate housing acts as an obstacle due to its length during the sliding movement of the separate housing on the second housing.

On the other hand, the hinge device 100 has a reduced length because the second hinge cam 102 is received in the cam groove 111 of the first hinge cam 101. Therefore, it is possible to install a separate third housing 203 capable of sliding on the second housing 202 while maintaining the shape of a typical folder-type portable terminal.

As described above, the hinge device for the portable terminal according to the present invention has a reduced length and can occupy significantly reduced space in the portable terminal. Further, the hinge device allows the separate housing to be installed to the portable terminal while maintaining the shape of the portable terminal so that the separate housing slidably moves, thereby contributing to the variety of possible designs for the portable terminal. Furthermore, since the hinge device requires a small space in the portable terminal, the specifications of the portable terminal may be easily changed.

While the invention has been shown and described with reference to certain embodiments thereof, it will be understood by those skilled in the art that various changes in form and details may be made therein without departing from the spirit and scope of the invention as defined by the appended claims.

## Claims

1. A hinge device for rotatably coupling a first housing of a portable terminal to a second housing of a portable terminal, the hinge device comprising:
a first hinge cam disposed on one of the first and second housings of the portable terminal, the first hinge cam comprising a cam groove formed on a surface of the first hinge cam; and
a second hinge cam disposed on the other of the first and second housings of the portable terminal, the second hinge cam being rotatably received in the cam groove so as to generate friction with an inner wall of the cam groove.

2. The hinge device for a portable terminal as claimed in claim 1, wherein the second hinge cam comprises:
a pair of cam members that generate friction with the inner wall of the cam groove; and
at least one elastic member disposed between the cam members, the at least one elastic member providing elastic force to the cam members so that the cam members contact the inner wall of the cam groove.

3. The hinge device for a portable terminal as claimed in claim 1, wherein the inner wall of the cam groove comprises at least one stopper groove; and an outer surface of the second hinge cam comprises at least one stopper protuberance, the at least one stopper protuberance engaging the at least one stopper groove as the second hinge cam rotates.

4. The hinge device for a portable terminal as claimed in claim 1, wherein the inner wall of the cam groove comprises a pair of stopper groove; and an outer peripheral surface of the second hinge cam comprises a pair of stopper protuberances, the pair of stopper protuberances engaging the pair of stopper grooves as the second hinge cam rotates.

5. The hinge device for a portable terminal as claimed in claim 4, wherein the pair of stopper grooves are disposed at about 180° with respect to one another, and the pair of stopper protuberances are disposed at about 180° with respect to one another.

6. The hinge device for a portable terminal as claimed in claim 1, further comprising:
a hinge cover assembled with the first hinge cam to cover the cam groove.

7. The hinge device for a portable terminal as claimed in claim 6, further comprising:
a supporting shaft extending from a bottom surface of the cam groove, the supporting shaft penetrating the second hinge cam and the hinge cover; and
a restraining member coupled to an end portion of the supporting shaft penetrating the hinge cover.

8. The hinge device for a portable terminal as claimed in claim 7, further comprising
a guide hole penetrating the supporting shaft lengthwise.

9. The hinge device for a portable terminal as claimed in claim 6, further comprising:
at least one guide groove formed on an inner surface of the second hinge cam; and
at least one guide protuberance disposed on the hinge cover, the at least one guide shaft engaging the guide grooves to restrain the second hinge cam from rotating with respect to the hinge cover.

10. The hinge device for a portable terminal as claimed in claim 8, wherein the hinge cover is fixed to one of the first and second housings.

11. The hinge device for a portable terminal as claimed in claim 6, further comprising:
at least one supporting protrusion disposed on the hinge cover; and
a hole formed on the at least one supporting protrusion.

12. A hinge device for a portable terminal, comprising:
a first hinge cam disposed on one of the first and second housings of the portable terminal;
a cam groove formed on the first hinge cam, the cam groove comprising an inner wall; and
a second hinge cam disposed on the other of the first and second housings of the portable terminal, the second hinge cam comprising:
a pair of cam members, the cam members having an outer peripheral surface that contacts the inner wall of the cam groove; and
at least one elastic member disposed between the pair of cam members, the elastic member biasing the cam members towards the inner wall of the cam groove.

13. The hinge device for a portable terminal as claimed in claim 12, wherein the inner wall of the cam groove comprises at least one stopper groove; and an outer peripheral surface of the second hinge cam comprises at least one stopper protuberance, the at least one stopper protuberance engaging the at least one stopper groove as the second hinge cam rotates.

14. The hinge device for a portable terminal as claimed in claim 12, wherein the inner wall of the cam groove comprises a pair of stopper groove; and an outer peripheral surface of the second hinge cam comprises a pair of stopper protuberances, the pair of stopper protuberances engaging the pair of stopper grooves as the second hinge cam rotates.

15. The hinge device for a portable terminal as claimed in claim 14, wherein the pair of stopper grooves are disposed at about 180° with respect to one another, and the pair of stopper protuberances are disposed at about 180° with respect to one another.

16. The hinge device for a portable terminal as claimed in claim 12, further comprising:
a hinge cover disposed on the first hinge cam to cover the cam groove.

17. The hinge device for a portable terminal as claimed in claim 16, further comprising:
a supporting shaft extending from a bottom surface of the cam groove, the supporting shaft penetrating the second hinge cam and the hinge cover; and
a restraining member coupled to an end portion of the supporting shaft penetrating the hinge cover.

18. The hinge device for a portable terminal as claimed in claim 16, further comprising:
at least one guide groove formed on an inner surface of the second hinge cam; and
at least one guide protuberance disposed on the hinge cover, the at least one guide shaft engaging the guide grooves to restrain the second hinge cam from rotating with respect to the hinge cover.

19. The hinge device for a portable terminal as claimed in claim 18, wherein the hinge cover is fixed to one of the first and second housings.

20. The hinge device for a portable terminal as claimed in claim 19, further comprising:
at least one supporting protrusion disposed on the hinge cover; and
a hole formed on the at least one supporting protrusion.

21. A portable terminal, comprising:
a first and a second housing;
a first hinge cam disposed on one of the first and second housings, the first hinge cam comprising a cam groove with an inner wall; and
a second hinge cam disposed on the other of the first and second housings, the second hinge cam comprising:
a pair of cam members; and
at least one elastic member disposed between the pair of cam members, the elastic member biasing the cam members towards the inner wall of the cam groove.

22. The portable terminal as claimed in claim 21, wherein the inner wall of the cam groove comprises at least one stopper groove; and an outer peripheral surface of the second hinge cam comprises at least one stopper protuberance, the at least one stopper protuberance engaging the at least one stopper groove as the second hinge cam rotates.

23. The portable terminal as claimed in claim 21, wherein the inner wall of the cam groove comprises a pair of stopper groove; and an outer peripheral surface of the second hinge cam comprises a pair of stopper protuberances, the pair of stopper protuberances engaging the pair of stopper grooves as the second hinge cam rotates.

24. The portable terminal as claimed in claim 23, wherein the pair of stopper grooves are disposed at about 180° with respect to one another, and the pair of stopper protuberances are disposed at about 180° with respect to one another.

25. The portable terminal as claimed in claim 21, further comprising
a hinge cover disposed on the first hinge cam to cover the cam groove.

26. The portable terminal as claimed in claim 25, further comprising:
a supporting shaft extending from a bottom surface of the cam groove, the supporting shaft penetrating the second hinge cam and the hinge cover; and
a restraining member coupled to an end portion of the supporting shaft penetrating the hinge cover.

27. The portable terminal as claimed in claim 25, further comprising:
at least one guide groove formed on an inner surface of the second hinge cam; and
at least one guide probuerance disposed on the hinge cover, the at least one guide shaft engaging the guide grooves to restrain the second hinge cam from rotating with respect to the hinge cover.

28. The portable terminal as claimed in claim 27, wherein the hinge cover is fixed to one of the first and second housings.
